(19) Europäisches Patentamt
European Patent Office
Office européen des brevets

(11) **EP 3 684 009 A1**

(12) **EUROPEAN PATENT APPLICATION**
published in accordance with Art. 153(4) EPC

(43) Date of publication:
**22.07.2020 Bulletin 2020/30**

(51) Int Cl.:
***H04L 12/24*** *(2006.01)*   ***H04L 29/08*** *(2006.01)*

(21) Application number: **17930891.1**

(22) Date of filing: **01.11.2017**

(86) International application number:
**PCT/CN2017/108949**

(87) International publication number:
**WO 2019/084853 (09.05.2019 Gazette 2019/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Huawei Technologies Co., Ltd.**
**Longgang District**
**Shenzhen, Guangdong 518129 (CN)**

(72) Inventors:
• **SHEN, Pei**
 **Shenzhen**
 **Guangdong 518129 (CN)**

• **SHEN, Kangkang**
 **Santa Clara, CA 95050 (US)**
• **HUANG, Biao**
 **Shenzhen**
 **Guangdong 518129 (CN)**
• **LEI, Shuying**
 **Shenzhen**
 **Guangdong 518129 (CN)**

(74) Representative: **Kreuz, Georg Maria**
 **Huawei Technologies Duesseldorf GmbH**
 **Riesstraße 25**
 **80992 München (DE)**

(54) **METHOD AND SYSTEM FOR DISCOVERING HARDWARE ATTRIBUTE OF BARE METAL SERVER**

(57)     The present invention provides a method for discovering a hardware attribute of a bare metal server and a system. For a problem that a bare metal manager can obtain a hardware attribute of a bare metal server only after an operating system is started in the bare metal server, and consequently efficiency is relatively low, the method for discovering a hardware attribute of a bare metal server provided in the present invention does not depend on the operating system. After a boot system in the bare metal server is started and before the boot system boots startup of the operating system, an information collection module is run in the boot system in the present invention. The information collection module collects the hardware attribute of the bare metal server, and sends the hardware attribute of the bare metal server to the bare metal manager.

FIG. 5B

**Description**

**TECHNICAL FIELD**

The present invention generally relates to information technologies (IT), and in particular, to a method for discovering a hardware attribute of a bare metal server and a system.

**BACKGROUND**

A server virtualization technology is a technology in which a plurality of virtual servers can be run on one physical server, and the virtual server is almost the same as the physical server for a user, application software, or even an operating system. The user may flexibly install any software on the virtual server. In the server virtualization technology, a server obtained through virtualization is referred to as a virtual machine (English: virtual machine, VM). An operating system running on the virtual machine is referred to as a guest operating system (English: guest OS). Software responsible for managing the virtual machine is referred to as a virtual machine monitor (English: virtual machine monitor, VMM), or may be referred to as a hypervisor (English: hypervisor).

A system providing a service by using the server virtualization technology may be referred to as a cloud computing system. Physical infrastructures of the cloud computing system include various physical devices, to provide computing, storage, or network resources. A bare metal server is one of the physical infrastructures of the cloud computing system. The cloud computing system needs to establish a basic environment for the bare metal server added to the cloud computing system, for example, add or delete the bare metal server, manage a power supply, and deploy an operating system. In this case, dedicated software may be used in the cloud computing system to manage a lifecycle of the bare metal server. For example, OpenStack (OpenStack is an open-source cloud computing management platform project) provides an Ironic component. The Ironic component provides an application programming interface (English: application programming interface, API) for managing the bare metal server. The API provided by the Ironic component can manage the bare metal server.

In the cloud computing system, management software (for example, Ironic) of the bare metal server collects a hardware attribute of the bare metal server before the bare metal server is provisioned (English: provision). The hardware attribute may be hard disk information (such as a size of hard disk storage space and/or a hard disk type), memory information, central processing unit (CPU) information (such as a quantity of CPU cores and/or a frequency of each core), and network interface card information of the bare metal server, or any combination thereof. After collecting the hardware attribute, the management software of the bare metal server provisions a resource of the bare metal server to the user. The bare metal server may be directly provisioned to the user. For example, the bare metal server may directly serve a high-intensity computing service or a service imposing a high requirement on real-time performance. Alternatively, the resource of the bare metal server may be virtualized, and then a virtualized resource is provisioned to the user.

When being to collect the hardware attribute of the bare metal server, the management software of the bare metal server needs to first start an operating system on the bare metal server by using a network, and then obtains the related hardware attribute by using an application in the operating system. The method is relatively time-consuming, and cannot meet a requirement of quickly provisioning the bare metal server by a bare metal manager.

**SUMMARY**

This specification provides various technical solutions to collect a hardware attribute of a bare metal server without depending on an operating system, so as to meet a requirement of quickly provisioning the bare metal server by a bare metal manager.

According to a first aspect, this application provides a cloud computing system, configured to discover a hardware attribute of a bare metal server. The cloud computing system includes a bare metal manager and the bare metal server. The bare metal manager is configured to power on the bare metal server, for example, control a startup system of the bare metal server by using a startup command. The startup system controls a power module to power on the bare metal server. After the bare metal server is powered on, a boot system such as a BIOS in the bare metal server is started. The boot system is configured to: run a preboot execution environment PXE client, boot startup of an operating system in a PXE startup mode, and run an information collection module before the operating system is started. The information collection module is configured to: collect the hardware attribute of the bare metal server, and send the hardware attribute of the bare metal server to the bare metal manager by using a network.

In the foregoing solution, the information collection module in the bare metal server is run in a phase before the operating system is started in a runtime environment of the boot system, so that the hardware attribute can be discovered without depending on the operating system, and the hardware attribute of the bare metal server can be obtained without starting the operating system and then quickly sent to the bare metal manager. Therefore, far less time is consumed when the bare metal manager obtains the hardware attribute of the bare metal server, and deployment efficiency of the bare metal server is improved. Especially when a plurality of bare metal servers need to be deployed in a large-sized data center, deployment efficiency is greatly improved. In addition, because of a very small size, there is no need to consume a large amount of network traffic when the information collection module is run and downloaded, so as to alleviate network congestion. In addition, performing the foregoing method by the boot system causes a slight change on the cloud computing system, and therefore development costs are also relatively low.

For the first aspect, in a possible implementation, the bare metal manager is further configured to enable the PXE startup mode of the bare metal server. This manner is applied to a scenario in which no operating system startup mode is set for the bare metal server, or a scenario in which an operating system is installed on the bare metal server (in the scenario in which the operating system has been installed in advance, an operating system startup mode is a non-PXE startup mode). In the foregoing implementation, the operating system startup mode can be switched to the PXE startup mode in the foregoing two scenarios.

For the first aspect, in another possible implementation, the boot system includes an information collection interface, and the information collection module is configured to invoke the information collection interface to obtain the hardware attribute of the bare metal server. In this manner, the boot system needs to be extended, so that the information collection interface is added to the boot system. The information collection module invokes the information collection interface to collect the hardware attribute. Because the boot system has obtained the hardware attribute in an initialization phase, the corresponding interface is directly added to the boot system to collect the hardware attribute, which is easy to implement.

For the first aspect, in another possible implementation, an information setting interface is further added to the boot system, the bare metal manager is further configured to send a hardware attribute modification request to the bare metal server by using the network, and the information collection module is further configured to invoke, based on the hardware attribute modification request, the information setting interface to modify the hardware attribute of the bare metal server. This implementation further provides a possibility that the bare metal manager modifies the hardware attribute of the bare metal server before the operating system of the bare metal server is started, so that the bare metal manager more flexibly manages the bare metal server.

For the first aspect, in another possible implementation, the information collection module is prestored in the bare metal manager, and the PXE client in the bare metal server is configured to: obtain an IP address assigned to the bare metal server, communicate with the bare metal manager by using the IP address, and download the information collection module from the bare metal manager. In this implementation, the bare metal manager provides the information collection module. To be specific, during specific implementation, the bare metal manager is extended by using an extensibility feature of the bare metal manager, so that the bare metal manager can provide the information collection module. In addition, the bare metal server obtains the information collection module without requiring an additional procedure, but obtains the information collection module in a PXE startup procedure.

In the foregoing implementation, an optional specific implementation is that the information collection module, instead of a PXE startup boot module, is stored in an FTP server, and the bare metal manager notifies the bare metal server of an address of the FTP server.

For the first aspect, in another possible implementation, the information collection module is prestored in the bare metal server, and the boot system in the bare metal server loads and runs the information collection module in a phase before the operating system is started. In this implementation, the information collection module is not stored on a bare metal manager side, but is stored in the bare metal server. When the boot system is run, in the phase before the operating system is loaded, the information collection module can be loaded and executed without being downloaded from a remote end, so as to save an execution time, and improve efficiency of discovering the hardware attribute of the bare metal server by the bare metal manager.

In the foregoing implementation, an optional specific implementation is that the bare metal server further includes an information collection switch. The information collection switch is configured to instruct the boot system whether to run the information collection module, and if the information collection switch instructs to run the information collection module, the boot system in the bare metal server is configured to load the information collection module.

Optionally, after the PXE client is run and before a PXE startup boot module is downloaded from an FTP server in the bare metal manager, the boot system runs the information collection module according to the instruction of the information collection switch.

For the first aspect, in another possible implementation, the information collection module in the bare metal server adds the hardware attribute of the bare metal server to a dynamic host configuration protocol DHCP message or a representational state transfer REST message.

According to the second aspect, this application provides a method for discovering a hardware attribute of a bare metal server, applied to a bare metal manager. The bare metal manager manages a bare metal server. The method includes: powering on the bare metal server, and receiving a hardware attribute of the bare metal server that is sent by the bare metal server by using a network. A boot system in the bare metal server is configured to: run a preboot execution environment PXE client, boot startup of an operating system in a PXE startup mode, and run an information collection module before the operating system of the bare metal server is started. The information collection module is configured to: collect the hardware attribute of the bare metal server, and send the hardware attribute of the bare metal server by using the network.

The method in the second aspect is applied to the bare metal manager. For a possible specific implementation in the second aspect, refer to the specific implementation part of the bare metal manager in the first aspect. Details are not described herein again.

According to a third aspect, this application provides a management apparatus, configured to manage a bare metal server. The management apparatus includes a storage device, configured to store an instruction; and at least one processor, coupled to the storage device. When the at least one processor in the the server executes the instruction, the instruction enables the processor to perform the method in the second aspect.

According to the fourth aspect, this application provides a bare metal manager, configured to manage a bare metal server. The manager includes: a startup management module, configured to power on the bare metal server, and a discovery module, configured to receive a hardware attribute of the bare metal server that is sent by the bare metal server by using a network. A boot system in the bare metal server is configured to: run a PXE client, boot startup of an operating system in a PXE startup mode, and run an information collection module before the operating system of the bare metal server is started. The information collection module is configured to: collect the hardware attribute of the bare metal server, and send the hardware attribute of the bare metal server by using the network.

For the fourth aspect, in a possible implementation, the startup management module is further configured to enable the PXE startup mode of the bare metal server.

For the fourth aspect, in another possible implementation, the discovery module is further configured to send a hardware attribute modification request to the bare metal server by using the network.

For the fourth aspect, in another possible implementation, the discovery module is further configured to: store the information collection module, and provide the information collection module to the bare metal server by using the network.

For the fourth aspect, in another possible implementation, the discovery module is specifically configured to: receive a dynamic host configuration protocol DHCP message sent by the bare metal server, and obtain, by using a DHCP server in the discovery module, the hardware attribute of the bare metal server that is carried in the DHCP protocol message; or the discovery module is specifically configured to: receive a representational state transfer REST protocol message sent by the bare metal server, and obtain, by using a parsing module in the discovery module, the hardware attribute of the bare metal server that is carried in the REST protocol message.

According to the fifth aspect, this application provides a method for discovering a hardware attribute of a bare metal server, applied to a bare metal server. A bare metal manager manages the bare metal server. The method includes: receiving a startup command of the bare metal manager, performing a power-on operation according to the startup command, and starting a boot system in the bare metal server after the bare metal server is powered on, where the boot system boots startup of an operating system in a preboot execution environment PXE startup mode; and before the operating system is started, collecting a hardware attribute of the bare metal server, and sending the hardware attribute of the bare metal server to the bare metal manager by using a network.

For the fifth aspect, in a possible implementation, before the collecting a hardware attribute of the bare metal server, the method further includes: obtaining an IP address assigned to the bare metal server, communicating with the bare metal manager by using the IP address, downloading an information collection module from the bare metal manager, and running the information collection module in the boot system.

For the fifth aspect, in another possible implementation, before the collecting a hardware attribute of the bare metal server, the method further includes: loading, by the boot system, an information collection module from the bare metal server and running the information collection module in a phase before the operating system is started.

For the fifth aspect, in another possible implementation, invoking, by the information collection module, an information collection interface in the boot system, to obtain the hardware attribute of the bare metal server.

For the fifth aspect, in another possible implementation, the method further includes: receiving a hardware attribute modification request sent by the bare metal manager, and invoking, by the information collection module, an information setting interface in the bare metal server based on the hardware attribute modification request, to modify the hardware attribute of the bare metal server.

According to a sixth aspect, this application provides a bare metal server. A bare metal manager manages the bare metal server. The server includes a startup controller, a central processing unit, a first internal memory, a second internal memory, and a network interface card. The startup controller is configured to: receive a startup command of the bare metal manager, and perform a power-on operation according to the startup command. The second internal memory stores a boot system, the boot system is loaded into the first internal memory after the bare metal server is powered on, and the central processing unit runs the boot system. The boot system is configured to: run PXE client, boot startup of an operating system in a PXE startup mode, and run an information collection module before the operating system is started. The information collection module is configured to: collect a hardware attribute of the bare metal server, and send the hardware attribute of the bare metal server to the bare metal manager by using the network interface card.

The sixth aspect is applied to the bare metal server. For a possible specific implementation in the sixth aspect, refer to the specific implementation part of the bare metal server in the first aspect. Details are not described herein again.

According to a seventh aspect, this application provides a computer program product. The computer program product is stored in a readable storage medium. The computer program product includes an instruction, the instruction is run in a runtime environment of a boot system in a computer, and is run before an operating system of the computer is started, and the instruction enables a processor to perform the following operations: invoking an information collection interface in the boot system, to collect hardware attribute information of the bare metal server; and sending the hardware attribute information of the bare metal server to a bare metal manager by using a network.

According to an eighth aspect, this application provides a computer system, including a manager and a server. The server includes a boot system, and the boot system is started after the server is powered on. The boot system is configured to: run a preboot execution environment PXE client, boot startup of an operating system in a PXE startup mode, and run an information collection module before the operating system is started. The information collection module is configured to: collect a hardware attribute of the server, and send the hardware attribute of the server to the manager by using a network. The manager is configured to receive the hardware attribute of the server that is sent by the server.

The computer system provided in the eighth aspect may be the cloud computing system provided in the first aspect, or may be a conventional data center system. The manager may include a bare metal manager, or may include a manager in any other form for implementing the functions in the seventh aspect of this application. The server may include a bare metal server, or may include a physical server in any other form for implementing the functions in the seventh aspect of this application.

Further, for a specific implementation in the eighth aspect, refer to the specific implementation in the first aspect.

After the following accompanying drawings and detailed descriptions are researched, other systems, methods, features, and advantages are apparent to a person of ordinary skill in the art. It is expected that the other systems, methods, features, and advantages are included in the descriptions, fall within the scope of the present invention, and are protected by the appended claims.

## BRIEF DESCRIPTION OF DRAWINGS

Preferred features of the present invention are described with reference to the accompanying drawings by using non-restrictive embodiments.

FIG. 1A is a simplified block diagram of a cloud computing system;
FIG. 1B is another simplified block diagram of a cloud computing system;
FIG. 2A is a schematic diagram of each phase of obtaining a hardware attribute of a bare metal server according to a conventional solution;
FIG. 2B is a schematic flowchart of obtaining a hardware attribute of a bare metal server according to the present invention;
FIG. 3A is a schematic diagram of each phase of obtaining a hardware attribute of a bare metal server;
FIG. 3B is a schematic diagram of a relationship between each phase of starting a bare metal server and either of each phase in a conventional solution and each phase in a solution of the present invention;
FIG. 4 is a block diagram of composition of a bare metal server according to a solution of this application;
FIG. 5A is a simplified block diagram of a computer system including a bare metal manager and a bare metal server according to a specific embodiment of this application;
FIG. 5B is a schematic flowchart of obtaining a hardware attribute of a bare metal server by a bare metal manager according to a specific embodiment of this application;
FIG. 6A is a simplified block diagram of a computer system including a bare metal manager and a bare metal server according to another specific embodiment of this application; and
FIG. 6B is a schematic flowchart of obtaining a hardware attribute of a bare metal server by a bare metal manager according to another specific embodiment of this application.

In all the accompanying drawings, a same reference sign or description represents similar but not necessarily completely the same components. Although example embodiments described in this specification are easily modified into or replaced with another form, specific embodiments are illustrated by using examples in the accompanying drawings and are described in detail in this specification. However, the example embodiments described in this specification are not intended to limit the disclosed specific form. Instead, the present invention covers all modifications, equivalents, and replacements that fall within the scope of the appended claims.

**DESCRIPTION OF EMBODIMENTS**

To make the objectives, technical solutions, and advantages of this application more understandable, the following provides detailed descriptions. The detailed descriptions provide various embodiments of a device and/or a process by using block diagrams, flowcharts, and/or examples. Because these block diagrams, flowcharts, and/or examples include one or more functions and/or operations, a person in the art may understand that each function and/or operation in these block diagrams, flowcharts, and/or examples may be implemented independently and/or jointly by using much hardware, software, firmware, and/or any combination thereof.

Terms included in this application are as follows:

Bare metal server: The bare metal server is one of physical facilities in a cloud computing system, may also be referred to as a bare metal node or a physical machine of a "bare" operating system, and is usually a server on which no operating system or virtualization software is installed. The physical machine of the "bare" operating system may alternatively be a physical machine on which an operating system is installed but no virtualization software is installed. To distinguish the bare metal server from another object (for example, a conventional physical server used for resource virtualization or a virtual machine obtained through virtualization) in the cloud computing system, in this application, a name "bare metal server" is used to represent a to-be-provisioned or to-be-deployed physical server in the cloud computing system. Actually, the bare metal server in this application may have a plurality of names, for example, a "to-be-provisioned server" and a "to-be-deployed server". No enumeration is provided herein.

Bare metal manager: The bare metal manager is configured to manage the bare metal server, and may also be referred to as a management component of the bare metal server. Herein, the term "management component" or "manager" may be software, firmware, middleware, microcode, hardware, and/or any combination thereof. For example, the management component or the manager may be any one or a combination of a module, a process, and a thread that are run on a general-purpose server, or may be a general-purpose server. There may be one or more management components or managers. The management component or the manager may be located on one general-purpose server, or may be distributed on at least two general-purpose servers. The management component or the manager may be obtained from a computer readable medium that stores various data structures and then is executed, or may be implemented by using various logical combinations of a hardware circuit. It can be learned from the foregoing descriptions that the bare metal manager is a name selected in this application for purpose of clear and uniform descriptions. When the technology in this application is specifically implemented, the bare metal manager may be implemented in a plurality of manners, and therefore may also be expressed in a plurality of manners, for example, a controller of the bare metal server, a control apparatus of the bare metal server, and an Ironic component or a component with another name. The foregoing general-purpose server is a physical server that includes a processor and a storage device and that is known by a person skilled in the art. The storage device is configured to store an instruction, and the processor is configured to execute the instruction.

Preboot execution environment (preboot execution environment, PXE): A PXE startup mode is a current mainstream diskless startup technology. In the PXE startup mode, a computer is started by using a network instead of from a device such as a local hard disk or a CD-ROM drive, and a client/server network mode is used. In a startup process, a terminal requests a server to assign an IP address, and then downloads a startup software package to a local memory for execution by using a file transfer protocol (file transfer protocol, FTP). The file transfer protocol may include a trivial file transfer protocol (trivial file transfer protocol, TFTP) or a multicast trivial file transfer protocol MTFTP (multicast trivial file transfer protocol) protocol. The startup software package completes basic software settings of the terminal, to boot an operating system of the terminal that is installed on the server in advance. The computer starts the operating system in a network startup mode, a compact disc startup mode, a hard disk startup mode, or the like. The PXE startup mode is the network startup mode thereof. In this application, the bare metal server executes a PXE client, and the bare metal manager executes a PXE server. The PXE server needs to support a DHCP function and a TFTP function. DHCP (Dynamic Host Configuration Protocol) is short for dynamic host configuration protocol. When supporting the DHCP function, the PXE server can assign an IP address to the PXE client. The IP address is used by the PXE client to communicate with the PXE server by using a network. When supporting the TFTP function, the PXE server can transfer a file to the PXE client by using the TFTP protocol, for example, a boot module related to the operating system or an image file of the operating system.

Server: The server in this application includes a hardware server and a software server. The software server is computer software that manages resources and provides corresponding services. In this application, any server corresponding to a client is a software server, for example, the PXE server, a DHCP server, or a TFTP server. The hardware server is a physical computing device different from a personal computer. In this application, the bare metal server, the configured server, and the general-purpose server are hardware servers.

Boot system: Different from an operating system, the boot system is configured to: manage startup of the bare metal server, control and drive important hardware, and provide low-layer invoking to high-layer software, and may specifically store a basic input/output system module, a post-startup self-check module, and a system auto-startup module of the bare metal server. The boot system may exist in a firmware form of a read-only memory written into the bare metal server. For example, the boot system may be a basic input/output system (Basic Input/Output System, BIOS), and specifically, may be a BIOS using a UEFI or not using the UEFI. The unified extensible firmware interface (Unified Extensible Firmware Interface, UEFI) is a programmable and extensible new firmware standard.

Power-on: In this application, power-on of a server means that the server enters a power-on state from a non-power-on state, but does not mean that the server enters a state in which the server is energized but not powered on from a state in which the server is not energized.

The following describes in detail a specific implementation scenario and method of this application.

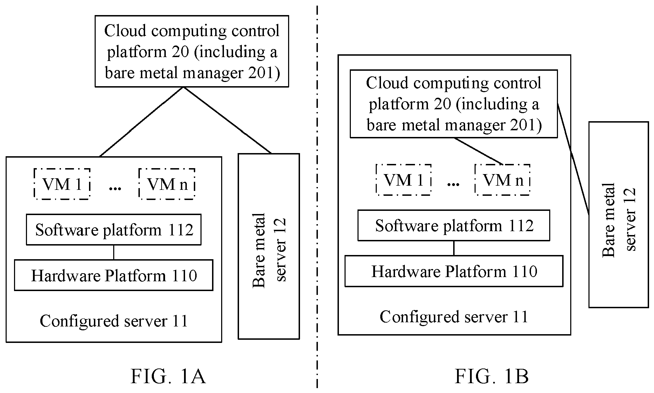

FIG. 1A and FIG. 1B are block diagrams of composition of a cloud computing system according to this application. As shown in FIG. 1A, a configured server 11 (one configured server is shown in the figure, but actually, there may be at least one configured server) in the cloud computing system is a server that has been powered on and on which an operating system or virtualization software has been installed. The configured server 11 includes a hardware platform 110. The hardware platform 110 may include a hard disk, a central processing unit, a network interface card, a memory, and the like in a physical structure of the server. A software platform 112 may be run on the hardware platform 110. The software platform 112 may include software such as virtualization software, an operating system of a virtual machine, and application software of the virtual machine. The virtualization software (such as a hypervisor) is an intermediate layer between physical hardware and the virtual machines, and is responsible for coordinating access of the virtual machines to the hardware platform. The hypervisor is also referred to as a virtual machine monitor VMM (Virtual Machine Monitor). The VMM includes a virtual hardware platform for implementing the virtual machines. The virtual hardware platform includes a memory, a central processing unit, a hard disk, a graphics chip, a network interface card, and the like that are obtained through virtualization. A plurality of virtual machines VM 1 to VM n are run on the VMM. Software systems of the virtual machines are run on the virtual hardware platform in the virtual machine monitor.

In addition to the configured server 11, the system in FIG. 1A further includes a bare metal server 12 (one bare metal server is shown in the figure, but actually, there may be at least one bare metal server). The cloud computing system needs to establish a basic environment for the bare metal server added to the cloud computing system, for example, add or delete the bare metal server, manage a power supply, and deploy an operating system. In this case, a dedicated bare metal manager 201 may be specially deployed on a cloud computing control platform 20 in the cloud computing system to manage a lifecycle of the bare metal server. For example, OpenStack provides an Ironic component. The Ironic component provides a series of APIs for managing a physical machine, to manage a physical machine of a "bare" operating system, for example, manage an entire lifecycle from power-on of the physical machine for installing an operating system to power-off of the physical machine for maintenance. The cloud computing control platform 20 may be independently deployed on one server, or may be deployed on a plurality of servers.

FIG. 1B shows another composition manner of the cloud computing system. A difference between FIG. 1B and FIG. 1A lies in that the cloud computing control platform 20 is implemented by a virtual machine in the configured server 11, in other words, the cloud computing control platform is not independently deployed on one physical machine, but runs on the virtual machine in the configured server 11 (the cloud computing control platform is deployed on the virtual machine VM n in the figure, or may actually be deployed on a plurality of virtual machines). The virtual machine implements a function of the cloud computing control platform 20.

In addition to the bare metal manager 201, the cloud computing control platform 20 may further include another component such as a virtual machine management component, a security component, a charging component, or a power consumption component.

The bare metal server described in FIG. 1A and FIG. 1B is implemented in the cloud computing system (a cloud data center). Actually, the bare metal server in this patent application may also be deployed in a conventional computer system (such as a conventional data center), to be specific, in a scenario in which no virtual machine is obtained through virtualization in a deployed server in the computer system. In this scenario, the bare metal manager and the bare metal server may be respectively referred to as a manager and a server. In addition, this patent application is also applicable to an initial scenario of the cloud computing system, for example, a scenario in which all servers in the cloud computing system are bare metal servers. In conclusion, the technical solutions of this application are applicable to both the scenario of the cloud computing system and the scenario of the conventional computer system, and a system to which the technical solutions of this application are applicable is a computer system.

Before the bare metal server is provisioned (Provision), the bare metal manager 201 needs to obtain a hardware attribute of the bare metal server. The hardware attribute may be a hard disk attribute (such as a size or a type), a memory attribute, a CPU attribute (such as an architecture, a quantity, a quantity of cores, or a frequency), a network interface card attribute (a MAC address), or a baseboard management controller (Baseboard Management Controller, BMC) attribute of the bare metal server, or any combination thereof. The foregoing listed hardware attributes do not cover all hardware attributes of the bare metal server. A person skilled in the art may obtain more hardware attributes of the bare metal server other than the foregoing the hardware attributes used as an example. The bare metal manager 201 can perform a corresponding operation on the bare metal server only after obtaining the hardware attribute. For example, after provisioning the bare metal server, the cloud computing system may perform computing virtualization or storage virtualization by using a hardware resource of the bare metal server, or may directly serve, by using the bare metal server, a high-intensity computing service or another service imposing a high requirement on real-time performance. In this application, a process in which the bare metal manager obtains the hardware attribute of the bare metal server is referred to as a process of discovering the hardware attribute of the bare metal server, and the process of discovering the hardware attribute of the bare metal server may include a process in which the bare metal manager triggers a discovery procedure and finally obtains the hardware attribute, and may also include a process in which the bare metal server collects the hardware attribute and reports the hardware attribute to the bare metal manager.

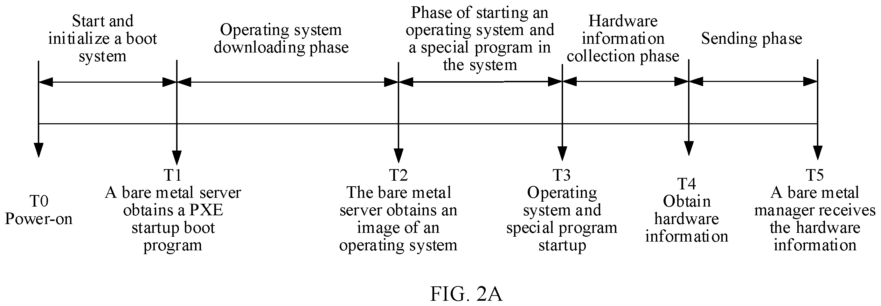

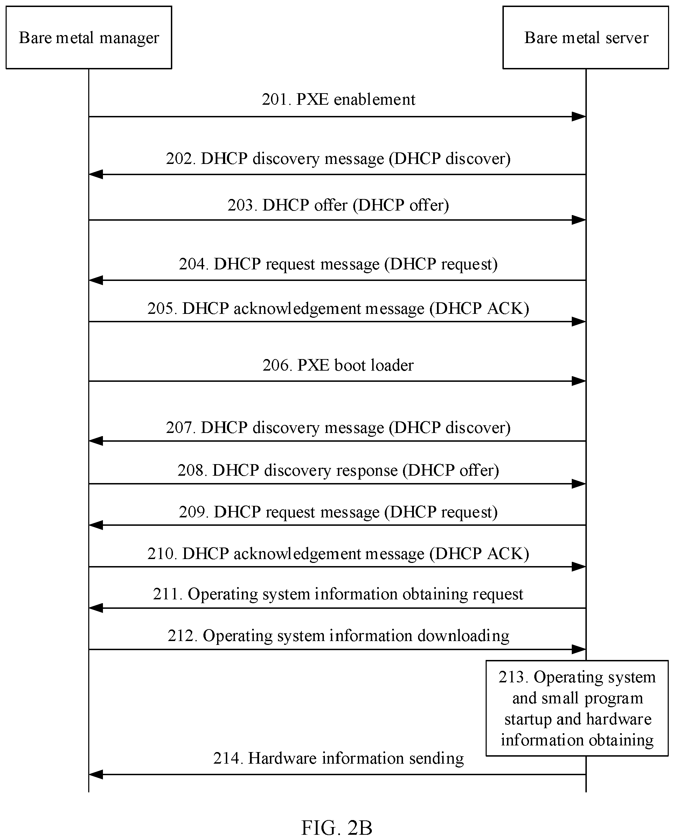

As shown in FIG. 2A and FIG. 2B, a conventional method for discovering a hardware attribute of a bare metal server by the bare metal manager 201 includes five phases. In a first phase, as shown in step 201, at a moment T0, the bare metal manager powers on the bare metal server, the bare metal manager 201 enables a PXE startup mode of the bare metal server 12, and a boot system in the bare metal server starts and runs a PXE client on a network interface card. Next, as shown in steps 202 to 205, the PXE client in the bare metal server 12 and the bare metal manager 201 (the bare metal manager 201 has a function of a DHCP server) perform an IP address assignment procedure, including a DHCP discovery, a DHCP offer, a DHCP request, and a DHCP acknowledgement. In this process, the bare metal manager 201 is used as the DHCP server to provide an IP address and a download address (such as an address of a TFTP server) of a to-be-downloaded file to the bare metal server. Then in step 206, the bare metal server 12 downloads a PXE startup boot module (such as a PXE boot loader) from the bare metal manager at a moment T1. In a second phase, because the PXE startup boot module is started, the bare metal server 12 needs to perform an IP address assignment procedure for the second time. Then, as shown in steps 207 to 210, the bare metal server obtains a new IP address. Then, in steps 211 and 212, the bare metal server sends a file obtaining request (which may be a TFTP request sent based on the address of the TFTP server) to the bare metal manager, and then the bare metal server obtains an image of an operating system at a moment T2. In a third phase, after the image of the operating system is obtained, the operating system (generally, the started operating system is a reduced Linux operating system) is started on the bare metal server 12. A special application module is started in the system. The application module starts to run at a moment T3. In a fourth phase, as shown in step 213, after being run, the special application module starts to collect the hardware attribute of the bare metal server, and obtains the hardware attribute at a moment T4. In a fifth phase, as shown in step 214, the bare metal server 12 sends the obtained hardware attribute to the bare metal manager 201 by using a network, and the bare metal manager 201 receives, at a moment T5, the hardware attribute sent by the bare metal server 12.

The foregoing method has problems of low efficiency and poor portability. Starting the operating system is time-consuming. Therefore, when hardware attributes of a plurality of bare metal servers are collected in batches, a bandwidth is occupied and a delay is increased when the image of the operating system is downloaded by using the network. In addition, currently, an additionally run operating system configured to collect a hardware attribute can support only an X86-type bare metal server, but cannot support an ARM-type bare metal server. Consequently, poor portability is caused.

Based on the foregoing prior-art problems, this patent application provides a method for discovering a hardware attribute of a bare metal server without starting an operating system, and a system. In this patent application, by using a boot system in the bare metal server, after the boot system in the bare metal server is started and before the boot system boots startup of an operating system, an information collection module is run on the boot system. The information collection module collects a hardware attribute of the bare metal server, and sends the collected hardware attribute to the bare metal manager by using a network.

The information collection module is a new function module provided in this application. The module is run in a phase after the boot system is started and before the operating system is loaded, and is configured to discover the hardware attribute of the bare metal server. Generally, the information collection module may be a small application or a small program, for example, an information collection application or an information collection program. Generally, after the bare metal server is powered on, the boot system is started. A runtime environment of the boot system includes the following phases: an initialization phase of the bare metal server, a phase before the operating system is started (also referred to as a phase before the operating system is loaded), and a startup phase of the operating system (after the operating system is started, the boot system is not run). The information collection module in this application is run in the phase that is before the operating system is started and that is in the runtime environment of the boot system.

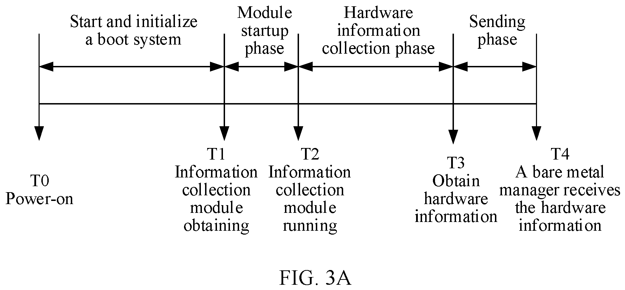

In the solution provided in this application and shown in FIG. 3A, the bare metal manager 201 collects a hardware attribute of a bare metal serve in four phases. In a first phase, at a moment T0, the bare metal server 12 is powered on, a boot system in the bare metal server 12 is started, and the bare metal manager 201 enables a PXE startup mode of the bare metal server 12. Then, at a moment T1, the bare metal server 12 runs an information collection module (in this application, the bare metal server may externally load and run the information collection module, or may internally load and run the information collection module, and detailed descriptions are provided in subsequent embodiments). In a second phase, namely, a phase of starting the information collection module, at a moment T2, the information collection module is run in a runtime environment of the boot system in the bare metal server 12 (this phase is a phase before an operating system is started in the runtime environment of the boot system). In a third phase, the information collection module invokes an information collection interface in the boot system to obtain the hardware attribute of the bare metal server 12. At a moment T3, the information collection module obtains the hardware attribute of the bare metal server 12. In a fourth phase, namely, a phase of reporting the hardware attribute of the bare metal server 12, the information collection module transmits the collected hardware attribute of the bare metal server 12 to the bare metal manager 201 by using a network. The bare metal manager 201 obtains the hardware attribute at a moment T4. Before executing the fourth phase of sending the hardware attribute, the bare metal server 12 further needs to obtain an IP address. In this case, the bare metal server 12 sends a DHCP request to obtain an IP address. A DHCP server in the bare metal manager 201 responds to the DHCP request, and assigns an IP address to the bare metal server 12.

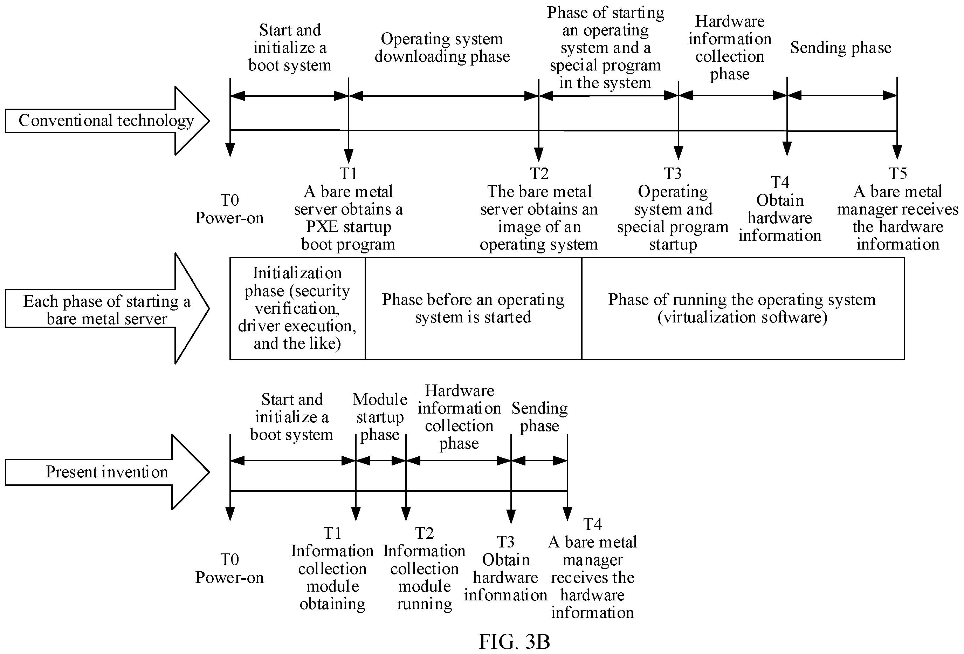

FIG. 3B shows a relationship between a procedure of discovering a hardware attribute of a bare metal server in solutions of this application and each phase after the bare metal server is powered on, and a relationship between a procedure of discovering a hardware attribute of a bare metal server in the prior art and each phase after the bare metal server is powered on. It can be learned from FIG. 3B that the information collection module provided in the solutions of this application is run in the phase that is before the operating system is started and that is in the runtime environment of the boot system, so that the hardware attribute can be discovered without depending on the operating system, and the hardware attribute of the bare metal server can be obtained without starting the operating system and then quickly sent to the bare metal manager. Therefore, far less time is consumed when the bare metal manager obtains the hardware attribute of the bare metal server, and deployment efficiency of the bare metal server is improved. Especially when a plurality of bare metal servers need to be deployed in a large-sized data center, deployment efficiency is greatly improved. In addition, because of a very small size, there is no need to consume a large amount of network traffic when the information collection module is run and downloaded, so as to alleviate network congestion. In addition, performing the foregoing method by the boot system causes a slight change on the system, and therefore development costs are also relatively low. In addition, in the prior-art method, only the X86-type bare metal server can be supported, but the advanced reduced instruction set computing machine (Advanced RISC Machine, ARM)-type bare metal server cannot be supported. This is because a prior-art operating system configured to install specific software cannot be applied to the ARM-type bare metal server. However, in the method in this application, the hardware attribute is discovered without depending on the operating system, so as to resolve the foregoing problem, and improve universality of a manner of discovering the hardware attribute of the bare metal service.

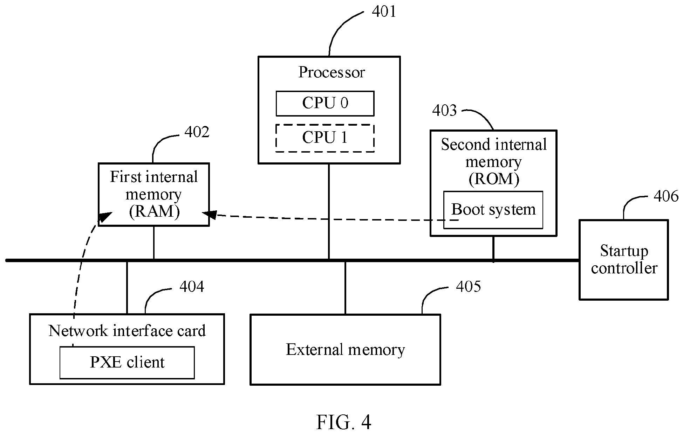

FIG. 4 is a block diagram of composition of the bare metal server 12 in solutions of this application. The processor 401 may include one or more CPUs. The first internal memory 402 may be a random access memory RAM, and is configured to: after the CPU is started, read an instruction and enable the CPU to execute the instruction. The second internal memory 403 may be a read-only memory ROM or a flash. Firmware (firmware) may be disposed on the ROM. The firmware is a module written into the ROM, and is usually responsible for setting and controlling basic and underlying hardware of a system. In this embodiment of this application, the second internal memory 403 may store a boot system. The boot system may be a BIOS using a UEFI or a BIOS without using a UEFI. The boot system is loaded into the first internal memory 402 after the bare metal server is powered on, so that the processor 401 runs the boot system to boot startup of an operating system of the bare metal server. The network interface card 404 is provided with a PXE client (the PXE client is actually a client module in a ROM inside the network interface card, and in this application, an example in which the PXE client is disposed on the network interface card is used in this application, and a person skilled in the art may also integrate the PXE client into the boot system), and is configured to communicate with the bare metal manager. The PXE client may alternatively be loaded into the first internal memory 402, so that the processor 401 runs the PXE client. After being loaded into the memory, the PXE client has functions of both a DHCP client and a TFTP client. The DHCP client requests, from a DHCP server, an IP address assigned to the bare metal server. Then, the PXE client locally downloads a file stored in a remote end for running by using a TFTP. The external memory 405 is configured to store data. Before the bare metal server is provisioned, the external memory 405 usually stores no data. The startup controller 406 is configured to: communicate with a bare metal management system by using an intelligent platform management interface (IPMI, Intelligent Platform Management Interface), and receive a startup command of the bare metal management system. The startup command is used to power on the bare metal server, so that the boot system in the bare metal server is started. Further, the boot command may be further used to enable a PXE startup mode of the bare metal server. The startup controller 406 is specifically a baseboard management controller (Baseboard Management Controller, BMC), and the basic management controller is usually configured to measure an internal physical variable of the bare metal server, for example, a temperature, a humidity, a power voltage, a fan speed, a communication parameter, and an operating system function. If any one of the foregoing variables falls beyond a specified range, the BMC gives an alarm. In this application, the BMC may be further configured to implement the functions of the startup controller.

The PXE startup mode of the bare metal server is usually enabled by the bare metal manager in a cloud computing scenario. However, in a special scenario, the PXE startup mode of the bare metal server may alternatively be manually set, or may be activated by default. For example, the PXE startup mode is set by default when the bare metal server is delivered out of factory, and the PXE startup mode of the bare metal server is activated by default after the boot system is started. In this case, the bare metal manager does not need to additionally enable the PXE startup mode. When the bare metal manager 201 is to enable the PXE startup mode of the bare metal server, the bare metal manager may remotely set a startup mode of the bare metal server to the PXE startup mode, or may modify, into the PXE startup mode, a non-PXE startup mode that is set by default when the bare metal server is delivered out of factory. Specifically, the bare metal manager may enable the PXE startup mode of the bare metal server by using the baseboard management controller. If no operating system is installed on the bare metal server in advance, the bare metal manager may directly set the startup mode of the bare metal server to the PXE startup mode. If an operating system has been installed on the bare metal server in advance, that the bare metal manager enables the PXE startup mode of the bare metal server may include: modifying an operating system startup mode of the bare metal server from hard disk/optical disk startup to PXE startup. Further, after modifying the startup mode, the bare metal manager may further restart the bare metal server.

Power-on of the bare metal serve is controlled by the bare metal manager by using a startup command in a cloud computing scenario. However, in some special scenarios, the bare metal server may alternatively be manually powered on. In this case, the method for discovering a hardware attribute of a bare metal server in this application can still be performed.

The power-on of the bare metal server and the enablement of the PXE startup mode may be performed at the same time, or may be performed in sequence. This can be flexibly implemented by a person skilled in the art.

In this application, the boot system in the second internal memory 403 may be improved in two aspects. In one aspect, the information collection interface is added to the boot system, to collect the hardware attribute of the bare metal server. In the other aspect, the boot system is configured to provide a runtime environment of the information collection module. The information collection module is run in the environment of the boot system, and before the boot system boots startup of the operating system, invokes the information collection interface to obtain the hardware attribute of the bare metal server, and send the obtained hardware attribute of the bare metal server to the bare metal manager. The information collection module may be a firmware module preset in the second internal memory ROM in the bare metal server, or may be a software module downloaded from the bare metal manager in the PXE phase. The following describes the two implementations in detail.

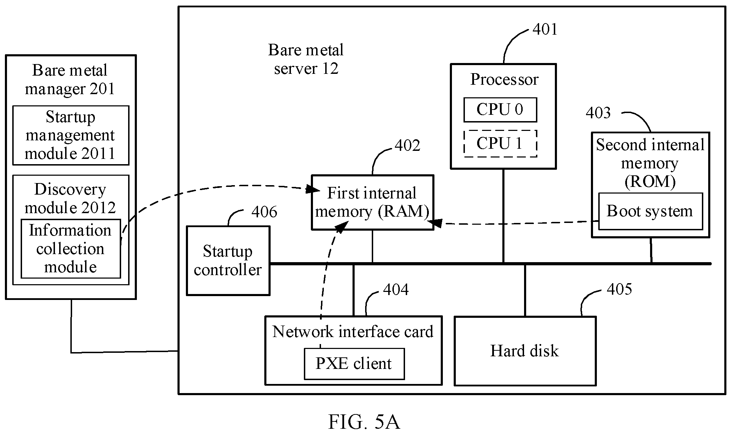

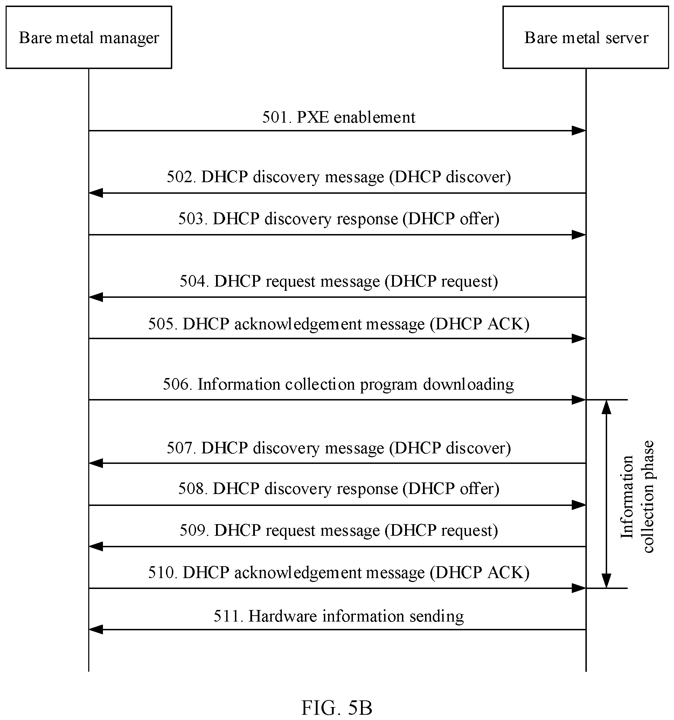

FIG. 5A is a simplified block diagram of a computer system including a bare metal manager and a bare metal server according to a specific embodiment of this application. FIG. 5B is a flowchart of a method for obtaining a hardware attribute of a bare metal server by a bare metal manager in the system shown in FIG. 5A. When a server resource needs to be added to the cloud computing system, the bare metal manager needs to provision the bare metal server. Before provisioning the bare metal server, the bare metal manager needs to collect a hardware attribute of the bare metal server. In this embodiment, an information collection module, instead of a startup boot module, is prestored on a TFTP server on a bare metal manager side, in other words, the information collection module is downloaded from the bare metal manager in a PXE phase.

In step 501, the bare metal manager 201 enables a PXE startup mode of the bare metal server 12, and powers on the bare metal server 12. Specifically, a startup management module 2011 in the bare metal manager may send a startup command to a startup system of the bare metal server, to control a startup controller 406 in the bare metal server to power on the bare metal server and enable the PXE startup mode. After the bare metal server 12 is powered on, a boot system in a second internal memory 403 is loaded into a first internal memory 402, a processor 401 of the bare metal server 12 executes the boot system, and the boot system is started. After finding that the PXE startup mode is enabled, the boot system loads a PXE client on the network interface card 404 and runs the PXE client (after the PXE client is run on the bare metal server, the bare metal server 12 executes a function of the PXE client, and correspondingly, the bare metal manager 201 executes a function of the PXE server). The PXE client executes an IP address obtaining procedure. Specifically, the IP address obtaining procedure includes steps 502 to 505. Both the boot system and the PXE client are run by using the processor 401 of the bare metal server. In the following procedure, the IP address obtaining procedure is described by using the bare metal server as a body. In step 502, the bare metal server 12 sends a DHCP discovery message. The DHCP discovery message is usually a broadcast message. A discovery module 2012 of the bare metal manager 201 has the function of the PXE server, and receives the DHCP discovery message sent in a broadcast manner. In step 503, the bare metal manager 201 sends a DHCP offer (offer) to the bare metal server 12. In step 504, after receiving the DHCP offer sent by the bare metal manager 201, the bare metal server 12 sends a DHCP request to the bare metal manager 201 to obtain an IP address. After receiving the DHCP request, the bare metal manager 201 assigns an IP address to the bare metal server 12. In addition, in a PXE startup process, when or after sending the IP address to the bare metal server 12, the bare metal manager 201 may further notify the bare metal server 12 of information about a to-be-downloaded file. The information about the to-be-downloaded file is used to instruct the bare metal server 12 to download the to-be-downloaded file from the bare metal manager, to execute a related function of the to-be-downloaded file. The information about the to-be-downloaded file may include information such as address information of a download server, a storage address of the to-be-downloaded file, or a name of the to-be-downloaded file. Generally, in the PXE startup process, a file is transmitted between the PXE client and the PXE server by using the TFTP. The download server may be a TFTP server. Therefore, the information about the to-be-downloaded file of which the bare metal manager 201 notifies the bare metal server 12 may be an address of the TFTP server (the download server is usually disposed on the bare metal manager side, and in some cases, the bare metal manager is the download server). In an existing PXE technology, a to-be-downloaded file stored on a TFTP server is a startup boot module (such as a PXE boot loader, configured to boot startup of an operating system). In this embodiment of this application, the TFTP server on the bare metal manager 201 side stores no startup boot module, but stores the information collection module. In other words, the to-be-downloaded file stored on the TFTP server is the information collection module instead of a startup boot module. The information collection module is configured to enable the bare metal server to obtain and send a hardware attribute of the bare metal server 12. Therefore, in step 505, the bare metal server 12 receives the IP address and the information about the to-be-downloaded file that are sent by the bare metal manager 201. In this specific embodiment, the information about the to-be-downloaded file is a storage address of the information collection module.

In step 506, the bare metal server 12 downloads the information collection module from the download server based on the storage address of the information collection module, and loads the information collection module into a memory of the bare metal server. Specifically, the discovery module 2012 in the bare metal manager 201 notifies the bare metal server 12 of the storage address of the information collection module, and receives a file obtaining request sent by the bare metal server 12 based on the storage address of the information collection module. The bare metal manager 201 provides the information collection module to the bare metal server 12 by using a network. After the bare metal server 12 downloads the information collection module, the information collection module is run in a runtime environment of the boot system, and invokes an information collection interface in the boot system, to obtain the hardware attribute of the bare metal server 12. Specifically, if the boot system is a UEFI BIOS, the information collection module may be a UEFI application, and the UEFI application is run in a UEFI BIOS environment. After the bare metal server 12 downloads and runs the information collection module, because an original IP address cannot be transmitted to the information collection module, an IP address needs to be obtained again. An IP address obtaining procedure in steps 507 to 510 is the same as that in steps 502 to 505, and details are not described again. After obtaining the IP address again, in step 511, the bare metal server 12 sends the hardware attribute of the bare metal server that is obtained in an information collection phase to the bare metal manager 201.

It should be noted that, after downloading the information collection module in step 506, the bare metal server 12 runs the information collection module and starts information collection. An IP address obtaining phase in steps 507 to 510 may be synchronized with the information collection phase. The bare metal server may obtain the IP address and collect the hardware attribute at the same time or in a sequence. This embodiment of this patent application imposes no special requirement herein. After obtaining the IP address (the IP address is used for network communication) and the hardware attribute (the hardware attribute is sent to the bare metal manager), the bare metal server 12 performs step 511 of sending the hardware attribute by using the network.

In the foregoing embodiment of this application in which the bare metal manager obtains the hardware attribute of the bare metal server, the bare metal manager provides the information collection module. The information collection module is run in the runtime environment of the boot system in the bare metal server. After being run, the information collection module may invoke the information collection interface newly provided to the boot system, to obtain the hardware attribute of the bare metal server. The information collection module is run in a phase that is before the operating system is started and that is executed by the boot system. Therefore, in the solutions of this patent application, the hardware attribute of the bare metal server can be obtained without depending on the operating system, so that the bare metal manager can more quickly obtain the hardware attribute of the bare metal server. This greatly improves provisioning efficiency of the bare metal server. In addition, because of a relatively small size, there is no need to consume a large amount of network traffic when the information collection module is run and downloaded. This alleviates network congestion. In addition, the hardware attribute of the bare metal server can be discovered with no need to make much improvement on the bare metal server.

In a more specific implementation of the foregoing embodiment, when the boot system in the bare metal server is the UEFI BIOS, the information collection module may be the UEFI application. According to a UEFI specification, the UEFI application is an application that is run after hardware initialization is completed and before the operating system is started. The UEFI application is run in a transient system load (Transient System Load, TSL) phase in a UEFI runtime environment. After the UEFI BIOS is started, the entire runtime environment includes the following phases: 1. Security phase (security phase, SEC): A computing device enters this phase after being powered on. 2. Pre-EFI initialization (Pre-EFI Initialization, PEI) phase: This phase is used to prepare an execution environment for a next phase. 3. Driver execution environment (Driver Execution Environment, DXE) phase: This phase is mainly used for system initialization, and the memory can be fully used in this phase. Therefore, complex operations can be performed in this phase. 4. Boot device selection (Boot Device Selection, BDS) phase: This phase is mainly used to execute a startup policy, and main functions include: initializing a console device, loading a device driver, and loading and executing a startup item based on system settings. The phases 1 to 4 may be collectively referred to as an initialization phase. 5. TSL phase: At this time, system resources are still controlled by a UEFI kernel. Because a function of the TSL phase is to prepare an execution environment for an OS loader, this phase is referred to as a temporary system. In the TSL phase, when a service ExitBootServices of a BS are invoked, the system enters a next phase. 6. Runtime (Run Time) phase: At this time, the system is controlled by the OS loader instead of the UEFI kernel. With running of the OS loader, the OS finally controls the system. The information collection module provided in this application is an application that is run in the phase 5, namely, the phase before the operating system is loaded. Therefore, the method for obtaining the hardware attribute before the operating system is started and sending the hardware attribute to the bare metal manager is implemented. This improves provisioning efficiency of the bare metal server.

In a more specific implementation of the foregoing embodiment, when the boot system in the bare metal server is the UEFI BIOS, an information collection interface may be added to an existing boot service (Boot Service) or runtime service (Runtime Service) of a UEFI, and the UEFI application invokes the information collection interface to obtain the hardware attribute of the bare metal server.

That the information collection interface is newly added to the UEFI may be described as follows:
The hardware attribute of the bare metal server is transmitted to an invoker (the information collection module, for example, the UEFI application). The hardware attribute may be encapsulated by using a typical structure, or may be transmitted by using an array. Specific content includes but is not limited to a CPU architecture, a quantity of logical CPUs, a hard disk size, a memory size, a MAC address, and the like.

That the information collection interface is newly added to the UEFI may be defined as follows:

```
        typedef EFI_STATUS (EFIAPI x EFI_HARDWARE_INFO_GET)(OUT
 struct *hardware_info);
        struct hardware_info {
         unsigned int arch; //architecture
         unsigned int vcpu_num; //quantity of logical CPUs of a system
         unsigned int disk_size; //hard disk size
           unsigned int memory_size; //memory size
          struct mac_info client_macs; //MAC address information
          ...
        };
        struct mac_info {
         unsigned int port_num; //quantity of network interfaces
         unsigned int mac[1]; //specific MAC information
        };
        ...
```

During more specific implementation of the foregoing embodiment, in an implementation, the bare metal server 12 may send the hardware attribute by using a DHCP protocol, for example, by adding the hardware attribute of the bare metal server to a DHCP option (DHCP option). After step 510, the bare metal server 12 obtains the IP address assigned by the DHCP server in the bare metal manager. After the information collection module obtains the hardware attribute of the bare metal server, in step 511, the information collection module may send a DHCP request message again and add the collected hardware attribute to an option code in the DHCP request message. After receiving the DHCP request message, the discovery module 2012 (including a function of the PXE server) in the bare metal manager 201 obtains the corresponding option code through parsing based on the configuration, and stores the hardware attribute of the bare metal server. Based on a reservation status of an option code in a DHCP protocol, any reserved bit in a reserved code 93 or a reserved code 128 to a reserved code 254 may be used to add a hardware attribute field of the bare metal server. For example, the code 93 is defined as an architecture field of the bare metal server (client-architecture), the code 128 is defined as a system CPU quantity field of the bare metal server (client-vcpu), the code 129 is defined as a system disk size of the bare metal server (client-disk), the code 130 is defined as a system memory size of the bare metal server (client-memory), and the code 131 is defined as network interface card information of the bare metal server (client-macs).

If sending the hardware attribute by using the DHCP protocol, the bare metal server may determine, based on a time at which the hardware attribute is actually obtained, a specific DHCP message to be used to carry the hardware attribute. In step 511 of the foregoing embodiment, the information collection module sends a DHCP request again to carry the hardware attribute of the bare metal server. Actually, the hardware attribute may alternatively be carried in the message in step 507 or step 509.

In addition, in another implementation, the bare metal server 12 may send the hardware attribute by using a representational state transfer (Representational State Transfer, REST) protocol message of an EFI. In this case, a peer end, namely, the discovery module 2012 in the bare metal manager 201, includes a function of parsing a REST protocol, to receive and parse the hardware attribute of the bare metal server that is carried in a REST packet.

Further, in an improved embodiment of this application, in addition to the information collection interface, an information setting interface may be further added to the boot system. The interface is configured to modify the hardware attribute of the bare metal server, for example, modify IP address information of a baseboard management controller (Baseboard Management Controller, BMC). Similar to the information collection interface, the information setting interface may also be added to the existing boot service or runtime service of the UEFI. Correspondingly, the bare metal manager may be further configured to send a hardware attribute modification request to the bare metal server. The information collection module may further include an information setting function, to invoke the information setting interface to set the hardware attribute of the bare metal server. The information setting interface may be specifically defined as follows:

$$\text{typedef EFI\_STATUS (EFIAPI x EFI\_HARDWARE\_INFO\_SET)(IN}$$

$$\text{struct *hardware\_info).}$$

A person skilled in the art may understand that the information setting interface may exist together with the information collection interface, or may exist independently. To be specific, the hardware attribute may be modified without collecting the hardware attribute, and before the operating system is started, the hardware attribute may be directly set by using a related technical method in this application, in other words, the bare metal manager modifies the hardware attribute of the bare metal server before collecting the hardware attribute of the bare metal server.

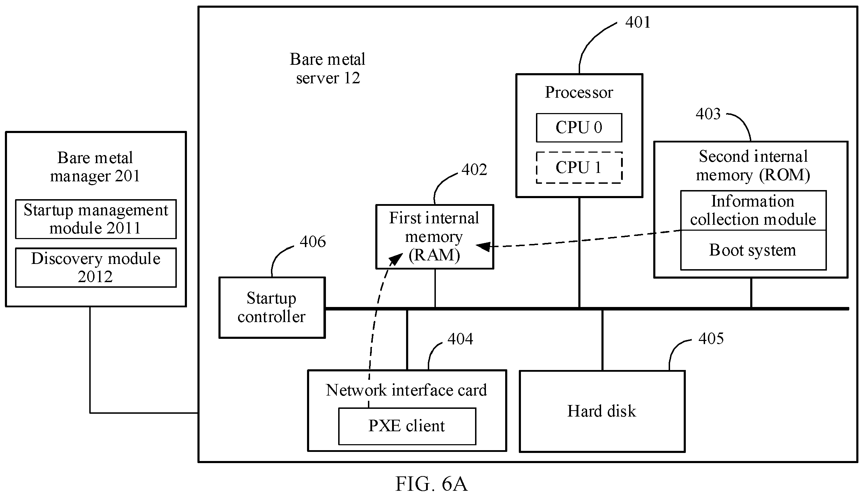

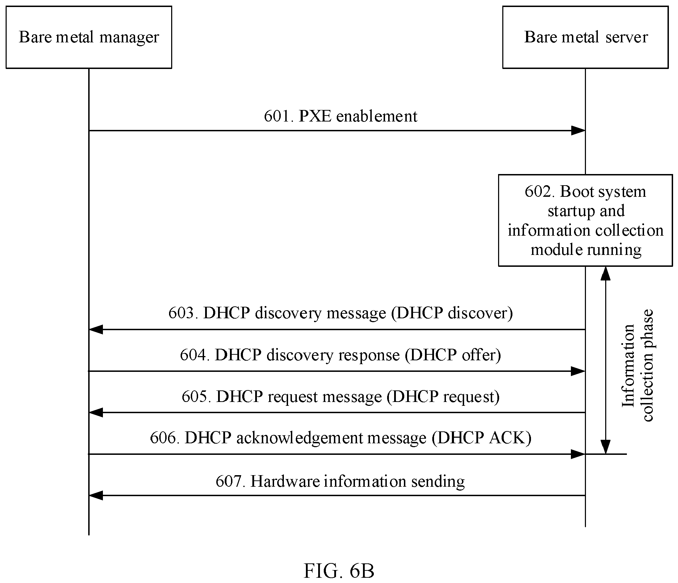

FIG. 6A is a simplified block diagram of a computer system including a bare metal manager and a bare metal server according to another specific embodiment of this application. FIG. 6B is a flowchart of a method for obtaining a hardware attribute of a bare metal server by a bare metal manager in the system shown in FIG. 6A. In this embodiment, an information collection module is prestored in a ROM of the bare metal server. Specifically, for example, the information collection module may be integrated into a boot system, in other words, the boot system in the bare metal server is improved, so that the information collection function module is added to the boot system.

In step 601, the bare metal manager 201 enables a PXE startup mode of the bare metal server 12, and powers on the bare metal server 12. In step 602, after the bare metal server 12 is powered on, the boot system in the second internal memory 403 is loaded into the first internal memory 402, the processor 401 of the bare metal server 12 executes the boot system, and the boot system is started. After finding that a PXE is enabled, the boot system loads a PXE client in the network interface card 404 and runs the PXE client. Further, in this embodiment, the bare metal server 12 further includes an information collection switch. The information collection switch is configured to instruct the boot system whether to run the information collection module. The boot system determines, according to the instruction of the information collection switch, whether to load the information collection module. During specific implementation, the bare metal manager may control, by using a BMC, the information collection switch to be turned on or off. For example, when the bare metal manager determines that a hardware attribute of the bare metal server is required, or when the bare metal server is to be provisioned, the bare metal manager turns on the information collection switch. Further, the boot system runs the PXE client in a phase before a PXE operating system boot module is downloaded from a TFTP server in the bare metal manager 201, the boot system runs the information collection module according to the instruction of the information collection switch, to discover the hardware attribute of the bare metal server. In this embodiment, the instruction of the information collection switch is that the information collection module needs to be loaded. Therefore, when the boot system is run in a phase before an operating system is loaded, the information collection module starts to run in an environment of the boot system, and collects the hardware attribute of the bare metal server. The information collection module invokes an information collection interface in the boot system to obtain the hardware attribute of the bare metal server 12. Specifically, if the boot system is a UEFI BIOS, the information collection module may be a UEFI application, and the UEFI application is run in a UEFI BIOS environment. In step 603 to 606, because the PXE client is run, the bare metal server further needs to perform an IP address obtaining procedure with the bare metal manager. This procedure has been described in the foregoing embodiment, and details are not described herein again. After obtaining an IP address, in step 607, the bare metal server 12 sends the hardware attribute of the bare metal server that is obtained in an information collection phase to the bare metal manager 201.

In this embodiment, other than a storage location, an attribute and a specific implementation and function of the information collection module, for example, a manner of sending the hardware attribute to the bare metal manager, may be consistent with those in the foregoing implementation in which the information collection module is downloaded from the bare metal manager side. Details are not described in this

embodiment again.

In the foregoing embodiment, the information collection module is not stored on a bare metal manager side, but is stored in the bare metal server. When the boot system is run, in the phase before the operating system is loaded, the information collection module can be loaded and executed without being downloaded from a remote end, so as to discover the hardware attribute of the bare metal server. In this embodiment, because the information collection module does not need to be downloaded from the bare metal manager, an execution time is saved, efficiency of obtaining the hardware attribute of the bare metal server by the bare metal manager is improved, and efficiency of provisioning the bare metal server by the bare metal manager is also improved.

In this application, generally, no operating system is installed on the bare metal server. For the bare metal server on which no operating system is installed, the bare metal manager may directly enable the PXE startup mode and power on the bare metal server, to implement a subsequent method for collecting a hardware attribute and sending the hardware attribute to the bare metal manager. For a bare metal server on which an operating system has been installed, the bare metal manager may modify a startup mode of the bare metal server and then restart the bare metal server.

Finally, it should be understood that the foregoing embodiments are merely used for explanation, and the technical solutions of this application are not limited thereto. Although this application is described in detail with reference to the foregoing preferred embodiments, it should be understood that a person skilled in the art may make various modifications, changes, or replacements without departing from the scope of the claims of this application.

## Claims

1. A cloud computing system, comprising a bare metal manager and a bare metal server, wherein
   the bare metal manager is configured to: power on the bare metal server, and receive a hardware attribute sent by the bare metal server by using a network;
   the bare metal server comprises a boot system, wherein the boot system is started after the bare metal server is powered on; and
   the boot system is configured to: run a preboot execution environment (PXE) client, boot startup of an operating system in a PXE startup mode, and run an information collection module before the operating system is started, wherein the information collection module is configured to: collect the hardware attribute of the bare metal server, and send the hardware attribute of the bare metal server to the bare metal manager by using the network.

2. The system according to claim 1, wherein the bare metal manager is further configured to enable the PXE startup mode of the bare metal server.

3. The system according to claim 1 or 2, wherein the boot system comprises an information collection interface; and the information collection module is configured to invoke the information collection interface to obtain the hardware attribute of the bare metal server.

4. The system according to claim 3, wherein the boot system further comprises an information setting interface; and the bare metal manager is further configured to send a hardware attribute modification request to the bare metal server by using the network, and the information collection module is further configured to invoke, based on the hardware attribute modification request, the information setting interface to modify the hardware attribute of the bare metal server.

5. The system according to any one of claims 1 to 4, wherein the information collection module is prestored in the bare metal manager; and
   the PXE client in the bare metal server is configured to: obtain an internet protocol (IP) address assigned to the bare metal server, communicate with the bare metal manager by using the IP address, and download the information collection module from the bare metal manager.

6. The system according to claim 5, wherein the bare metal manager is further configured to send a storage address of the information collection module to the bare metal server.

7. The system according to claim 6, wherein the storage address of the information collection module is an address of a file transfer protocol (FTP) server in the bare metal manager, and the information collection module, instead of a PXE startup boot module, is stored in the FTP server.

8. The system according to any one of claims 1 to 4, wherein the information collection module is prestored in the bare metal server, and the boot system in the bare metal server loads the information collection module froma read-only memory and runs the information collection module in a phase before the operating system is started.

**9.** The system according to claim 8, wherein the bare metal server further comprises an information collection switch, and the information collection switch is configured to instruct the boot system whether to run the information collection module; and
if the information collection switch instructs to run the information collection module, the boot system in the bare metal server is configured to load the information collection module.

**10.** The system according to claim 9, wherein after the PXE client is run and before a PXE startup boot module is downloaded from an FTP server in the bare metal manager, the boot system runs the information collection module according to the instruction of the information collection switch.

**11.** The system according to any one of claims 1 to 10, wherein the information collection module in the bare metal server adds the hardware attribute of the bare metal server to a dynamic host configuration protocol (DHCP) message or a representational state transfer REST message.

**12.** A method for discovering a hardware attribute of a bare metal server, applied to a bare metal manager, wherein the bare metal manager manages a bare metal server, and the method comprises: powering on the bare metal server; and receiving a hardware attribute of the bare metal server that is sent by the bare metal server by using a network, wherein a boot system in the bare metal server is configured to: run a preboot execution environment PXE client, boot startup of an operating system in a PXE startup mode, and run an information collection module before the operating system of the bare metal server is started, wherein the information collection module is configured to: collect the hardware attribute of the bare metal server, and send the hardware attribute of the bare metal server by using the network.

**13.** The method according to claim 12, wherein the method further comprises: enabling the PXE startup mode of the bare metal server.

**14.** The method according to claim 12 or 13, wherein the method further comprises:
sending a hardware attribute modification request to the bare metal server by using the network.

**15.** The method according to any one of claims 12 to 14, wherein the bare metal manager is further configured to store the information collection module; and
before the receiving a hardware attribute of the bare metal server that is sent by the bare metal server, the method further comprises:
providing the information collection module to the bare metal server by using the network.

**16.** The method according to claim 15, wherein the method further comprises: notifying the bare metal server of a storage address of the information collection module, wherein the storage address of the information collection module is an address of a file transfer protocol FTP server in the bare metal manager, and the information collection module, instead of a PXE startup boot module, is stored in the FTP server.

**17.** The method according to any one of claims 12 to 16, wherein the receiving a hardware attribute of the bare metal server that is sent by the bare metal server comprises:
receiving a dynamic host configuration protocol (DHCP) message or a representational state transfer (REST) message sent by the bare metal server, to obtain the hardware attribute of the bare metal server that is carried in the DHCP message or the REST message.

**18.** A management apparatus, configured to manage a bare metal server, wherein the management apparatus comprises:

   a storage device, configured to store an instruction; and
   at least one processor, coupled to the storage device, wherein
   when the at least one processor executes the instruction, the instruction enables the processor to perform the method according to any one of claims 12 to 17.

**19.** A bare metal manager, configured to manage a bare metal server, wherein the manager comprises:

   a startup management module, configured to power on the bare metal server; and
   a discovery module, configured to receive a hardware attribute of the bare metal server that is sent by the bare metal server by using a network, wherein a boot system in the bare metal server is configured to: run a preboot execution environment (PXE) client, boot startup of an operating system in a PXE startup mode, and run an information collection module before the operating system of the bare metal server is started, wherein the information collection module is configured to: collect the hardware attribute of the bare metal server, and send the hardware attribute of the bare metal server by using the network.

20. The manager according to claim 19, wherein the startup management module is further configured to enable the PXE startup mode of the bare metal server.

21. The manager according to claim 19 or 20, wherein the discovery module is further configured to send a hardware attribute modification request to the bare metal server by using the network.

22. The manager according to claim 20 or 21, wherein the discovery module is further configured to: store the information collection module, and provide the information collection module to the bare metal server by using the network.

23. The manager according to any one of claims 19 to 22, wherein the discovery module is specifically configured to: receive a dynamic host configuration protocol (DHCP) message sent by the bare metal server, and obtain, by using a DHCP server in the discovery module, the hardware attribute of the bare metal server that is carried in the DHCP protocol message; or the discovery module is specifically configured to: receive a representational state transfer (REST) message sent by the bare metal server, and obtain, by using a parsing module in the discovery module, the hardware attribute of the bare metal server that is carried in the REST protocol message.

24. A method for discovering a hardware attribute of a bare metal server, applied to a bare metal server, wherein a bare metal manager manages the bare metal server, and the method comprises:

   receiving a startup command of the bare metal manager, performing a power-on operation according to the startup command, and starting a boot system in the bare metal server after the bare metal server is powered on, wherein the boot system boots startup of an operating system in a preboot execution environment (PXE) startup mode; and
   before the operating system is started, collecting a hardware attribute of the bare metal server, and sending the hardware attribute of the bare metal server to the bare metal manager by using a network.

25. The method according to claim 24, wherein before the collecting a hardware attribute of the bare metal server, the method further comprises:
   obtaining an internet protocol (IP) address assigned to the bare metal server, communicating with the bare metal manager by using the IP address, downloading an information collection module from the bare metal manager, and running the information collection module in the boot system.

26. The method according to claim 24, wherein before the collecting a hardware attribute of the bare metal server, the method further comprises:
   loading, by the boot system, an information collection module from the bare metal server and running the information collection module in a phase before the operating system is started.

27. The method according to any one of claims 24 to 26, wherein the collecting a hardware attribute of the bare metal server comprises:
   invoking, by the information collection module, an information collection interface in the boot system, to obtain the hardware attribute of the bare metal server.

28. The method according to claim 27, wherein the method further comprises:
   receiving a hardware attribute modification request sent by the bare metal manager, and invoking, by the information collection module, an information setting interface in the bare metal server based on the hardware attribute modification request, to modify the hardware attribute of the bare metal server.

29. The method according to any one of claims 24 to 28, wherein the sending the hardware attribute of the bare metal server to the bare metal manager by using a network comprises:
   adding the hardware attribute of the bare metal server to a dynamic host configuration protocol (DHCP) message or a representational state transfer (REST) protocol message, and sending the DHCP message or the REST protocol message to the bare metal manager.

30. A bare metal server, wherein the server comprises a startup controller, a central processing unit, a first internal memory, a second internal memory, and a network interface card, wherein
the startup controller is configured to: receive a startup command of a bare metal manager, and perform a power-on operation according to the startup command;
the second internal memory stores a boot system, wherein the boot system is loaded into the first internal memory after the bare metal server is powered on, the central processing unit runs the boot system, and the boot system is configured to: run a preboot execution environment (PXE) client, boot startup of an operating system in a PXE startup mode, and run an information collection module before the operating system is started; and
the information collection module is configured to: collect a hardware attribute of the bare metal server, and send the hardware attribute of the bare metal server to the bare metal manager by using the network interface card.

31. The bare metal server according to claim 30, wherein the boot system comprises an information collection interface; and
the information collection module invokes the information collection interface to obtain the hardware attribute of the bare metal server.

32. The bare metal server according to claim 31, wherein the boot system further comprises an information setting interface; and
the network interface card is further configured to receive a hardware attribute modification request sent by the bare metal manager, and the information collection module is further configured to invoke the information setting interface based on the hardware attribute modification request, to modify the hardware attribute of the bare metal server.

33. The bare metal server according to any one of claims 30 to 32, wherein the information collection module is prestored in the bare metal manager; and
the PXE client is configured to: obtain an internet protocol (IP) address assigned to the bare metal server, communicate with the bare metal manager by using the IP address, and download the information collection module from the bare metal manager by using the network interface card.

34. The bare metal server according to any one of claims 30 to 32, wherein the information collection module is prestored in the second internal memory in the bare metal server, and the boot system in the bare metal server is configured to load the information collection module from the second internal memory and run the information collection module in a phase before the operating system is started.

35. The bare metal server according to claim 34, wherein the bare metal server further comprises an information collection switch, and the information collection switch is configured to instruct the boot system whether to run the information collection module; and
if the information collection switch instructs to run the information collection module, the boot system loads the information collection module from the second internal memory into the first internal memory, and runs the information collection module.

36. The bare metal server according to claim 35, wherein after the PXE client is run and before the PXE client downloads a PXE startup boot module from an FTP server in the bare metal manager, the boot system runs the information collection module according to the instruction of the information collection switch.

37. A computer program product, wherein the computer program product is stored in a readable storage medium; and
the computer program product comprises an instruction, the instruction is run in a runtime environment of a boot system in a computer, and is run before an operating system of the computer is started, and the instruction enables a processor to perform the following operations:

    invoking an information collection interface in the boot system, to collect hardware attribute information of a bare metal server; and
    sending the hardware attribute information of the bare metal server to a bare metal manager by using a network.

38. A computer system, comprising a manager and a server, wherein
the server comprises a boot system, wherein the boot system is started after the server is powered on, and the boot system is configured to: run a preboot execution environment PXE client, boot startup of an operating system in a PXE startup mode, and run an information collection module before the operating system is started, wherein the information collection module is configured to: collect a hardware attribute of the server, and send the hardware attribute of the server to the manager by using a network; and
the manager is configured to receive the hardware attribute of the server that is sent by the server.

39. The system according to claim 38, wherein the information collection module is prestored in the manager; and the PXE client in the server is configured to: obtain an internet protocol (IP) address assigned to the server, communicate with the manager by using the IP address, and download the information collection module from the manager.

40. The system according to claim 38, wherein the information collection module is prestored in the server, and the boot system in the server loads and runs the information collection module in a phase before the operating system is started.

FIG. 1A

FIG. 1B

FIG. 2A

| Bare metal manager | | Bare metal server |
|---|---|---|

201. PXE enablement

202. DHCP discovery message (DHCP discover)

203. DHCP offer (DHCP offer)

204. DHCP request message (DHCP request)

205. DHCP acknowledgement message (DHCP ACK)

206. PXE boot loader

207. DHCP discovery message (DHCP discover)

208. DHCP discovery response (DHCP offer)

209. DHCP request message (DHCP request)

210. DHCP acknowledgement message (DHCP ACK)

211. Operating system information obtaining request

212. Operating system information downloading

213. Operating system and small program startup and hardware information obtaining

214. Hardware information sending

FIG. 2B

Start and initialize
a boot system

Module
startup
phase

Hardware
information
collection phase

Sending
phase

T0
Power-on

T1
Information
collection
module
obtaining

T2
Information
collection
module
running

T3
Obtain
hardware
information

T4
A bare metal
manager receives
the hardware
information

FIG. 3A

Conventional technology

Start and initialize a boot system | Operating system downloading phase | Phase of starting an operating system and a special program in the system | Hardware information collection phase | Sending phase

T0 Power-on

T1 A bare metal server obtains a PXE startup boot program

T2 The bare metal server obtains an image of an operating system

T3 Operating system and special program startup

T4 Obtain hardware information

T5 A bare metal manager receives the hardware information

Each phase of starting a bare metal server

| Initialization phase (security verification, driver execution, and the like) | Phase before an operating system is started | Phase of running the operating system (virtualization software) |

Present invention

Start and initialize a boot system | Module startup phase | Hardware information collection phase | Sending phase

T0 Power-on

T1 Information collection module obtaining

T2 Information collection module running

T3 Obtain hardware information

T4 A bare metal manager receives the hardware information

FIG. 3B

EP 3 684 009 A1

FIG. 4

FIG. 5A

FIG. 5B

FIG. 6A

FIG. 6B

# INTERNATIONAL SEARCH REPORT

International application No.

PCT/CN2017/108949

## A. CLASSIFICATION OF SUBJECT MATTER

H04L 12/24 (2006.01) i; H04L 29/08 (2006.01) i

According to International Patent Classification (IPC) or to both national classification and IPC

## B. FIELDS SEARCHED

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

CNKI, CNABS, VEN, CNTXT, EPTXT, WOTXT, USTXT: 裸, 金属, 服务器, 上电, 引导, 系统, 硬件, 属性, 启动, bare, metal, server, power, boot, system, hardware, information, attribute, startup, PXE

## C. DOCUMENTS CONSIDERED TO BE RELEVANT

| Category* | Citation of document, with indication, where appropriate, of the relevant passages | Relevant to claim No. |
|---|---|---|
| X | CN 104767649 A (HANGZHOU H3C TECHNOLOGIES CO., LTD.) 08 July 2015 (08.07.2015), claims 1-14, and figures 1-4 | 1-40 |
| A | CN 106888258 A (ZHENGZHOU YUNHAI INFORMATION TECHNOLOGY CO., LTD.) 23 June 2017 (23.06.2017), entire document | 1-40 |
| A | US 8326972 B2 (DEHAAN MICHAEL PAUL et al.) 04 December 2012 (04.12.2012), entire document | 1-40 |

☐ Further documents are listed in the continuation of Box C.       ☒ See patent family annex.

| | |
|---|---|
| *  Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"document member of the same patent family |

| Date of the actual completion of the international search | Date of mailing of the international search report |
|---|---|
| 14 December 2017 | 22 December 2017 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | PAN, Bin Telephone No. (86-10) 62412162 |

Form PCT/ISA /210 (second sheet) (July 2009)

**INTERNATIONAL SEARCH REPORT**
Information on patent family members

International application No.

PCT/CN2017/108949

| Patent Documents referred in the Report | Publication Date | Patent Family | Publication Date |
|---|---|---|---|
| CN 104767649 A | 08 July 2015 | None | |
| CN 106888258 A | 23 June 2017 | None | |
| US 8326972 B2 | 04 December 2012 | US 2010082799 A1 | 01 April 2010 |

Form PCT/ISA/210 (patent family annex) (July 2009)